# EUROPÄISCHE PATENTANMELDUNG

(11) **EP 4 752 413 A1**
(43) Veröffentlichungstag der Anmeldung: **03.06.2026**
(21) Anmeldenummer: 25219511.0
(22) Anmeldetag: 28.11.2025
(51) Int. Cl.: F16K 15/06, F16K 17/02, F16K 17/04

(54) **ÜBERDRUCKVENTIL**

(30) Priorität: 02.12.2024 DE 102024135636
(71) Anmelder: Leinemann GmbH & Co. KG, 38110 Braunschweig (DE)
(72) Erfinder: Kosmehl, Ralf, 31275 Lehrte (DE)
(74) Vertreter: Gramm, Lins & Partner Patent- und Rechtsanwälte PartGmbB

(57) **Zusammenfassung**

Die Erfindung betrifft ein Überdruckventil mit einem Ventilsitz (2) und einem Ventilteller (4), der in eine erste Position, in der er mit dem Ventilsitz (2) in Kontakt ist und das Überdruckventil geschlossen ist, und in eine zweite Position bringbar ist, in der das Überdruckventil geöffnet ist, dadurch gekennzeichnet, dass das Überdruckventil wenigstens ein Verriegelungselement (14), wenigstens ein Federelement (16) und wenigstens eine Ausnehmung (18) aufweist, wobei das wenigstens eine Verriegelungselement (14) von dem wenigstens einen Federelement (16) in der wenigstens einen Ausnehmung (18) gehalten wird, wenn sich der Ventilteller (4) in der ersten Position befindet und gegen eine von dem Federelement (16) aufgebrachte Kraft aus der wenigstens einen Ausnehmung (18) bewegt wird, wenn der Ventilteller (4) aus der ersten Position in die zweite Position gebracht wird.

## Beschreibung

Die Erfindung betrifft ein Überdruckventil mit einem Ventilsitz und einem Ventilteller, der in eine erste Position, in der er mit dem Ventilsitz in Kontakt ist und das Ventil geschlossen ist, und in eine zweite Position bringbar ist, in der das Ventil geöffnet ist.

Ein Überdruckventil im Sinne der vorliegenden Erfindung ist ein Ventil, das mit einem Behälter so verbunden wird, dass ein innerhalb des Behälters herrschender Druck direkt oder indirekt auf den Ventilteller des Überdruckventils wirkt. Ein solcher Behälter ist beispielsweise ein Tank, ein Reaktor, eine Pipeline oder Rohrleitung oder eine andere Art von Behälter, in dem sich eine Substanz, insbesondere ein Gas oder Gasgemisch befindet. Es gibt eine Reihe von Situationen, in denen der Druck innerhalb des Behälters ansteigen kann, beispielsweise eine Temperaturerhöhung, die zu einer Ausdehnung der in dem Behälter befindlichen Substanz führt. Diese Druckerhöhung kann dazu führen, dass der Behälter dem Druck bei Erreichen eines Grenzdrucks nicht mehr standhalten kann und nachgibt. Dies zerstört einerseits den Behälter und lässt andererseits den Inhalt des Behälters unkontrolliert entweichen. Je nach Substanz, die in dem Behälter gespeichert ist, kann dies zu einer großen Gefahr für die Umgebung führen.

Ein Überdruckventil im Sinne der vorliegenden Erfindung ist derart eingerichtet, dass der Ventilteller aus der ersten Position, in der das Ventil geschlossen ist, selbsttätig in die zweite Position gebracht wird, wenn die Druckdifferenz zwischen der dem Behälter zugewandten Seite des Ventiltellers, auf die der Druck innerhalb des Behälters wirkt und der gegenüberliegenden Seite, die also dem Behälter abgewandt ist, einen vorbestimmten Wert überschreitet. Dieser vorbestimmte Wert wird Ansprechdruck genannt, weil das Überdruckventil auf diesen Druck anspricht und selbsttätig öffnet. Selbsttätig bedeutet in diesem Fall, dass keine Einflussnahme durch einen menschlichen Bediener oder eine elektrische Steuerung, beispielsweise eine elektronische Datenverarbeitungseinrichtung nötig ist und auch keine solche Einflussnahme stattfindet. Es ist insbesondere nötig, dass ein Sensor den in dem Behälter herrschenden Druck misst, die Messdaten an eine elektrische Steuerung übermittelt werden und diese Steuerung dann Steuersignale an das Ventil sendet, um den Ventilteller durch einen dafür vorgesehenen Aktuator aus der ersten Position in die zweite Position zu bringen.

Selbsttätig bedeutet vorliegend, dass die Bewegung des Ventiltellers durch die Druckdifferenz erfolgt, die Druckdifferenz zwischen den auf die beiden Seiten des Ventiltellers wirkenden Drücke die für die Bewegung des Ventiltellers nötige Kraft bereitstellt.

Ein Überdruckventil im Sinne der vorliegenden Erfindung wird also aus dem geschlossenen Zustand in den geöffneten Zustand gebracht, wenn die Druckdifferenz zwischen den beiden Drücken, die auf die gegenüberliegenden Seiten des Ventiltellers wirken, einen vorbestimmten Wert überschreitet. Dann wird durch die Druckdifferenz eine Kraft auf den Ventilteller ausgeübt, die ihn aus der ersten Position in die zweite Position bringt. Dabei ist es unerheblich, ob diese Druckdifferenz erreicht wird, indem der Druck auf einer Seite des Ventiltellers erhöht oder der Druck auf der gegenüberliegenden Seite reduziert wird. Wichtig ist lediglich, dass der Ventilteller eine "Hochdruckseite", an der der höhere Druck anliegt, und eine "Niedrigdruckseite" aufweist, an der der niedrigere Druck anliegt.

In einer ersten Anwendung eines solchen Überdruckventils ist das Überdruckventil so mit einem Behälter verbunden, dass die Hochdruckseite des Ventiltellers dem Innenraum des Behälters zugewandt ist. Dann wirkt das Ventil als Schutz gegen einen zu hohen Druck im Innenraum des Behälters. Durch ein Öffnen des Ventils beim Erreichen des Ansprechdruckes wird Material aus dem Behälter abgelassen und der Druck innerhalb des Behälters sinkt.

In einer zweiten Anwendung eines solchen Überdruckventils ist das Überdruckventil so mit dem Behälter verbunden, dass die Niedrigdruckseite dem Innenraum des Behälters zugewandt ist. Dann wirkt das Ventil als Schutz gegen einen zu geringen Druck im Innenraum des Behälters. Durch ein Öffnen des Ventils beim Erreichen des Ansprechdruckes wird Material in den Behälter eingesaugt und der Druck innerhalb des Behälters steigt. Man könnte in diesem Fall auch von einem "Unterdruckventil" sprechen.

Derartige Überdruckventile sind aus dem Stand der Technik seit langem und in verschiedenen Ausführungen bekannt. Sie alle weisen einen Ventilteller auf, auf den eine Kraft wirkt, die durch die Kraft, die durch die Druckdifferenz erzeugt wird, überwunden werden muss, um den Ventilteller aus der ersten Position in die zweite Position zu bringen und so das Ventil aus dem geschlossenen Zustand in den geöffneten Zustand zu bringen. Diese Kraft kann durch die Gewichtskraft, die auf den Ventilteller wirkt und gegebenenfalls vorhandene Federelemente hervorgerufen werden, so dass sie durch die Konstruktion des Ventiltellers und der Federelemente eingestellt werden kann.

Überdruckventile werden für unterschiedliche Anwendungen konstruiert. Dies betrifft einerseits die Umweltbedingungen, unter denen sie betrieben werden, beispielsweise Umgebungstemperaturen und Luftfeuchtigkeit und die Drücke und Substanzen, denen sie standhalten müssen. Andererseits werden verschiedene Anforderungen an ihr Verhalten gestellt. So gibt es Überdruckventile, die auch als Schaltventile bezeichnet werden können, deren Ventilteller am Rand besonders ausgeformt ist, um ein möglichst schnelles Öffnen und gegebenenfalls Schließen zu ermöglichen. Wichtig ist insbesondere, ob für den Einsatzzweck eines Überdruckventils erwartet wird, dass es häufig anspricht, also in den geöffneten Zustand gebracht wird, oder nicht. In manchen Anwendungen ist das Überdruckventil ein Notfallventil, das im normalen Betrieb einer Anlage, deren Teil es ist, nicht ansprechen sollte. Es kann in diesen Anwendungen Jahre dauern, bis der Notfall, der das Ventil ansprechen lässt und es in den geöffneten Zustand bringt, eintritt. Auch in diesem Fall muss das Überdruckventil funktionieren. Insbesondere dürfen Korrosion und andere Umwelteinflüsse die Bewegbarkeit des Ventiltellers nicht eingeschränkt haben.

Gleichzeitig darf sich auch der Ansprechdruck über diese Zeit nicht geändert haben, etwa weil elastisch vorgespannte Elemente relaxiert haben, so dass eine ursprünglich elastische Verformung in eine plastische Verformung übergegangen ist. Eine Reduzierung des Ansprechdruckes hätte ein zu frühes und damit unnötiges Ansprechen zur Folge. Eine Erhöhung des Ansprechdruckes hätte zur Folge, dass das Überdruckventil zu spät oder schlimmstenfalls gar nicht anspricht.

Für derartige Anforderungen, bei denen das Überdruckventil wahrscheinlich über einen langen Zeitraum nicht ansprechen wird, dann aber sicher funktionieren muss, sind sogenannte "pin tech"-Ventile entwickelt worden. Der Ventilteller wird durch einen Stab oder Stift ("pin") in der ersten Position gehalten. Bei Erreichen des Ansprechdruckes wird dieser Stab oder Stift geknickt und der Ventilteller kann durch die anliegende Druckdifferenz bewegt werden. Nachteilig ist, dass dieses Ventil nicht erneut geschlossen oder wiederverwendet werden kann, ohne dass zumindest der Stab oder Stift ausgetauscht und durch einen intakten Stab oder Stift ersetzt wird. Dies hat einen hohen Wartungsaufwand im Falle des Ansprechens zur Folge.

Der Erfindung liegt daher die Aufgabe zugrunde, ein Überdruckventil so weiterzuentwickeln, dass es auch nach langer Zeit noch verlässlich funktioniert und einfacher wiederverwendet und erneut geschlossen werden kann.

Die Erfindung löst die gestellte Aufgabe durch ein Überdruckventil gemäß dem Oberbegriff des Anspruchs 1, das sich dadurch auszeichnet, dass das Überdruckventil wenigstens ein Verriegelungselement, wenigstens ein Federelement und wenigstens eine Ausnehmung aufweist, wobei das wenigstens eine Verriegelungselement von dem wenigstens einen Federelement in der wenigstens einen Ausnehmung gehalten wird, wenn sich der Ventilteller in der ersten Position befindet und gegen eine von dem Federelement aufgebrachte Kraft aus der wenigstens einen Ausnehmung bewegt wird, wenn der Ventilteller aus der ersten Position in die zweite Position gebracht wird.

Der Ventilteller des erfindungsgemäßen Überdruckventils muss also um aus der ersten Position in die zweite Position bewegt zu werden, die von dem wenigstens einen Federelement aufgebrachte Kraft überwinden, mit der das wenigstens eine Verriegelungselement in der wenigstens einen Ausnehmung gehalten wird. Um den Ventilteller des erfindungsgemäßen Überdruckventils aus der ersten Position in die zweite Position zu bewegen, muss das wenigstens eine Verriegelungselement gegen eine von dem wenigstens einen Federelement aufgebrachte Kraft aus der wenigstens einen Ausnehmung verschoben werden. In einer bevorzugten Ausgestaltung ist die von dem Federelement aufgebrachte Kraft nicht in die der Bewegungsrichtung des Ventiltellers entgegengesetzte Richtung gerichtet, sondern die Richtung der Kraft schließt mit der Bewegungsrichtung des Ventiltellers einen Winkel ein, der besonders bevorzugt 90° beträgt.

Wenn also beispielsweise ein Überdruckventil so angeordnet ist, dass der Ventilteller nach oben, also entgegen der Schwerkraft, verschoben werden muss, um ihn aus der ersten Position in die zweite Position zu bewegen, weist die von den wenigstens einen Federelement ausgeübte Kraft eine Richtung auf, die nicht vertikal, sondern in einem Winkel dazu, besonders bevorzugt horizontal, verläuft.

Die auf den Ventilteller wirkende Kraft aufgrund des Druckunterschiedes zwischen den beiden Seiten des Ventiltellers ist vorzugsweise entlang der Bewegungsrichtung des Ventiltellers gerichtet. Dies bedeutet, dass zumindest ein Teil dieser Kraft in die Richtung der von dem wenigstens einen Federelement ausgeübten Kraft umgelenkt werden muss.

Dies geschieht vorzugsweise durch die Kontaktstelle zwischen dem wenigstens einen Verriegelungselement und der Ausnehmung, beispielsweise einer Seitenwand und/oder dem Boden der Ausnehmung. Je nach Winkel der Fläche, an der diese Kontaktstelle liegt, kann der Anteil der in Bewegungsrichtung des Ventiltellers wirkenden Kraft, der in Richtung der von dem Federelement aufgebrachten Kraft umgelenkt wird, verändert werden.

Die Kraft des Federelementes, die zum Öffnen des Überdruckventils überwunden werden muss, und die auf den Ventilteller durch die Druckdifferenz wirkende Kraft verlaufen nicht parallel und nur ein Teil der auf den Ventilteller wirkenden Kraft wird umgelenkt. Dadurch ist der Betrag der von dem Federelement erzeugten Kraft kleiner als die dem Ansprechdruck entsprechende Kraft. Bei gleichem Ansprechdruck kann also die Kraft des Federelementes und damit das Federelement selbst kleiner ausgebildet werden. Die mechanischen Belastungen der elastischen Bauteile insbesondere des Federelementes sind somit klein und die Gefahr, dass sie über die Jahre zu einer plastischen Verformung des Federelementes führen, ebenfalls gering.

Sobald das wenigstens eine Verriegelungselement aus der Ausnehmung bewegt wurde, kann sich der Ventilteller bewegen und in die zweite Position verschoben werden. Durch das wenigstens eine Verriegelungselement wirkt dann gegebenenfalls noch eine Kraft auf den Ventilteller, weil das Verriegelungselement durch das Federelement noch in Richtung der Ausnehmung gedrückt wird, dadurch wird jedoch nur noch eine Kraft auf den Ventilteller aufgebracht, die der Bewegung nicht mehr nennenswert entgegensteht. Ab dem Moment, in dem das Verriegelungselement aus der Ausnehmung verschoben ist, ist die der Bewegung des Ventiltellers entgegengesetzte Kraft reduziert und der Ventilteller wird besonders schnell aus der ersten Position in die zweite Position verschoben und das Überdruckventil geöffnet.

Vorzugsweise weist das Überdruckventil mehrere, vorzugsweise zwei, drei oder vier, Verriegelungselemente, mehrere vorzugsweise zwei, drei oder vier, Federelemente und mehrere, vorzugsweise zwei, drei oder vier, Ausnehmungen auf. Durch mehrere Verriegelungselemente lässt sich die von den Federelementen ausgeübte Kraft, die der Bewegung des Ventiltellers bis zum Erreichen des Ansprechdruckes entgegensteht, besser auf den Ventilteller verteilen. Insbesondere für den Fall, dass die von den Federelementen erzeugte Kraft nicht parallel zur Bewegungsrichtung des Ventiltellers verläuft, lässt sich durch mehrere Federelemente und mehrere Verriegelungselemente erreichen, dass sich die von den Federelementen erzeugten Kräfte, zumindest in einer Richtung senkrecht zur Bewegungsrichtung des Ventiltellers, besonders bevorzugt in jeder Richtung senkrecht zur Bewegungsrichtung des Ventiltellers, gegenseitig kompensieren.

Bevorzugt weist wenigstens ein Verriegelungselement, besonders bevorzugt jedes Verriegelungselement einen Stift, einen Bolzen und/oder eine Kugel auf. In einer bevorzugten Ausgestaltung handelt es sich bei wenigstens einem Verriegelungselement, vorzugsweise bei jedem Verriegelungselement, um einen Stift, einen Bolzen und/oder eine Kugel.

Vorteilhafterweise ist wenigstens ein Verriegelungselement, vorzugsweise jedes Verriegelungselement aus einem Metall, beispielsweise Stahl oder Aluminium, oder aus einer Keramik hergestellt. Es hat sich als vorteilhaft herausgestellt, wenn alle Verriegelungselemente sowohl in Form und Größe als auch bei dem Material, aus dem sie hergestellt sind, gleich ausgebildet sind.

Vorzugsweise ist an dem Ventilteller ein Vorsprung, beispielsweise eine Ventilspindel, eine Stange, ein Stab oder ein Stift angeordnet, der in einer Führung des Überdruckventils bewegbar ist, indem der Ventilteller aus der ersten Position in die zweite Position oder umgekehrt gebracht wird. In einer konstruktiv besonders einfachen Ausgestaltung erstreckt sich der Vorsprung von dem Ventilteller ausgehend nach oben, also weg von der dem Behälter zugewandten Seite des Ventiltellers. Der Vorsprung ist an dem Ventilteller lösbar verbunden, beispielsweise angeschraubt oder eingeschraubt. Alternativ ist der Vorsprung mit dem Ventilteller unlösbar verbunden, beispielsweise genietet, geschweißt oder einstückig mit dem Ventilteller ausgebildet.

Vorteilhafterweise ist die wenigstens eine Ausnehmung an dem Vorsprung und das wenigstens eine Federelement an der Führung angeordnet. Besonders bevorzugt ist die wenigstens eine Ausnehmung eine Nut, in der mehrere Verriegelungselemente gehalten werden, wenn sich der Ventilteller in der ersten Position befindet. Das Verriegelungselement liegt an wenigstens einer Seitenwand und/oder dem Boden der Nut an, wenn sich der Ventilteller in der ersten Position befindet.

Vorzugsweise ragt das wenigstens eine Verriegelungselement in die Ausnehmung hinein, wenn es in der Ausnehmung gehalten wird. Das Verriegelungselement muss also nicht vollständig in der Ausnehmung enthalten sein, es ist ausreichend, wenn es in die Ausnehmung hineinragt.

In einer bevorzugten Ausgestaltung weist das Überdruckventil einen Energiespeicher auf, in dem Energie gespeichert wird, wenn der Ventilteller aus der ersten Position in die zweite Position gebracht wird. Dieser Energiespeicher ist beispielsweise als elastisches Element, beispielsweise ein Federelement, ein Elastomerelement und/oder ein pneumatisches Element ausgebildet. Wenn der Ventilteller bei Erreichen des Ansprechdruckes geöffnet wird, schnellt er vorzugsweise aus der ersten Position in die zweite Position. Dort wird er abgebremst und die Energie, die er dabei verliert, wird in dem Energiespeicher gespeichert. Vorzugsweise weist der Energiespeicher eine Freigabeeinrichtung auf. Wird diese Freigabeeinrichtung, die auch als Betätigungselement bezeichnet werden kann, betätigt, wird zumindest ein Teil der gespeicherten Energie, vorzugsweise die gesamte gespeicherte Energie freigegeben und wirkt so auf den Ventilteller, dass er wieder aus der zweiten Position in die erste Position bewegt wird.

Die Freigabeeinrichtung weist vorzugsweise ein Betätigungselement auf, das manuell und/oder durch eine elektrische Steuerung betätig werden kann. Die elektrische Steuerung kann, muss aber nicht, Teil des Überdruckventils sein.

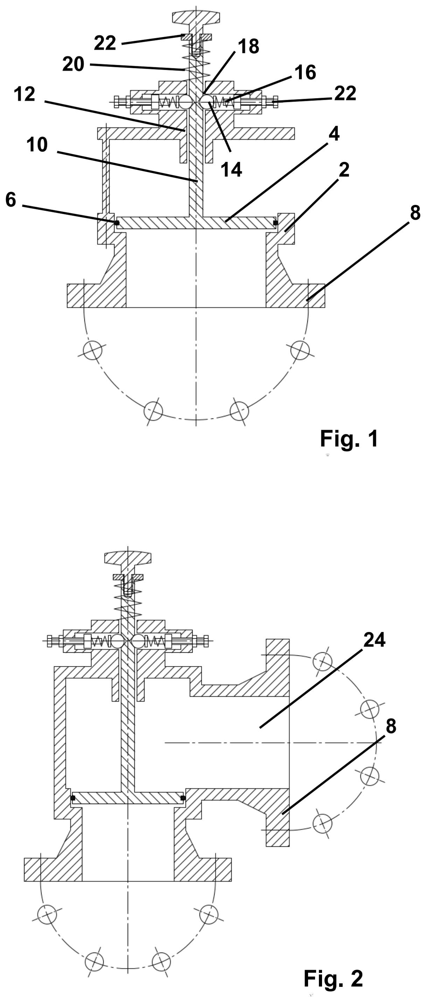

Mit Hilfe der beigefügten Figuren werden nachfolgend einige Ausführungsbeispiele der vorliegenden Erfindung näher erläutert. Dabei zeigen die Figuren 1 bis 13 schematische Schnittdarstellungen durch ein Überdruckventil gemäß verschiedenen Ausführungsformen der vorliegenden Erfindung.

Figur 1 zeigt einen Schnitt durch ein Überdruckventil gemäß einem Ausführungsbeispiel der vorliegenden Erfindung. Es verfügt über einen Ventilsitz 2 und einen Ventilteller 4, der sich in der gezeigten Darstellung in der ersten Position befindet, in der er am Ventilsitz 2 anliegt. Am Ventilteller 4 ist ein Dichtring 6 angeordnet, der den Bereich zwischen dem Ventilteller 4 und dem Ventilsitz 2 abdichtet. Das gezeigte Überdruckventil weist einen Flansch 8 auf, mit dem es an einem Behälter befestigt werden kann. Der Ventilteller verfügt über einen Vorsprung 10, der im gezeigten Ausführungsbeispiel als Ventilspindel ausgebildet ist und in einer Führung 12 bewegbar ist.

Der Ventilteller 4 befindet sich in Figur 1 in seiner ersten Position, das Überdruckventil ist also geschlossen. Um den Ventilteller 4 in seine zweite Position zu bringen, wird der Ventilteller 4 in Figur 1 nach oben bewegt. Die Hochdruckseite des Ventiltellers 4 befindet sich in Figur 1 also unten und die Niedrigdruckseite oben. An der Führung sind in Figur 1 zwei Verriegelungselemente 14 in Form von Kugeln angeordnet, die jeweils von einem Federelement 16 in einer Ausnehmung 18 gedrückt und darin gehalten werden. Am oberen Ende des Vorsprungs 10 befindet sich eine Feder 20, die eine in Figur 1 nach oben wirkende Kraft ausübt und so den Ansprechdruck verringert. Die Feder 20 weist einen Vorspanner 22 auf, durch den die von der Feder aufgebrachte Kraft eingestellt werden kann. Ein ähnlicher Vorspanner 22 ist an jedem Federelement 16 angeordnet, so dass auch deren Kraft, durch die das jeweilige Verriegelungselement 14 in der Ausnehmung 18 gehalten wird, einstellbar ist. Der Vorspanner 22 wird mit dem Ventilteller 4 und dem Vorsprung 6 nach oben bewegt, wenn der Ventilteller 4 aus der ersten Position in die zweite Position gebracht wird. Dadurch kann sich auch das obere Ende der Feder 20 nach oben bewegen und die Feder 20, die in Figur 1 im gespannten, vorliegend also im komprimierten Zustand dargestellt ist, entspannt sich.

Um den Ventilteller 4 aus der gezeigten ersten Position in die nicht gezeigte zweite Position zu bringen, muss die Gewichtskraft, die auf den Ventilteller 4 und den Vorsprung 10 wirkt, überwunden werden, abzüglich der von der Feder 20 aufgebrachten Kraft. Zusätzlich müssen die Verriegelungselemente 14 gegen die von den Federelementen 16 aufgebrachten Kräfte nach radial außen verschoben und so aus den Ausnehmungen 18 herausbewegt werden.

Figur 2 zeigt den Schnitt durch ein Überdruckventil gemäß einem weiteren Ausführungsbeispiel der vorliegenden Erfindung. Es unterscheidet sich von dem in Figur 1 gezeigten Ausführungsbeispiel durch einen geschlossenen Auslass 24, der in Figur 2 anders als in Figur 1 mit einem weiteren Flansch 8 versehen ist, so dass beispielsweise eine Rohrleitung angeschlossen werden kann. Davon abgesehen sind die Ausgestaltungen der Figuren 1 und 2 baugleich.

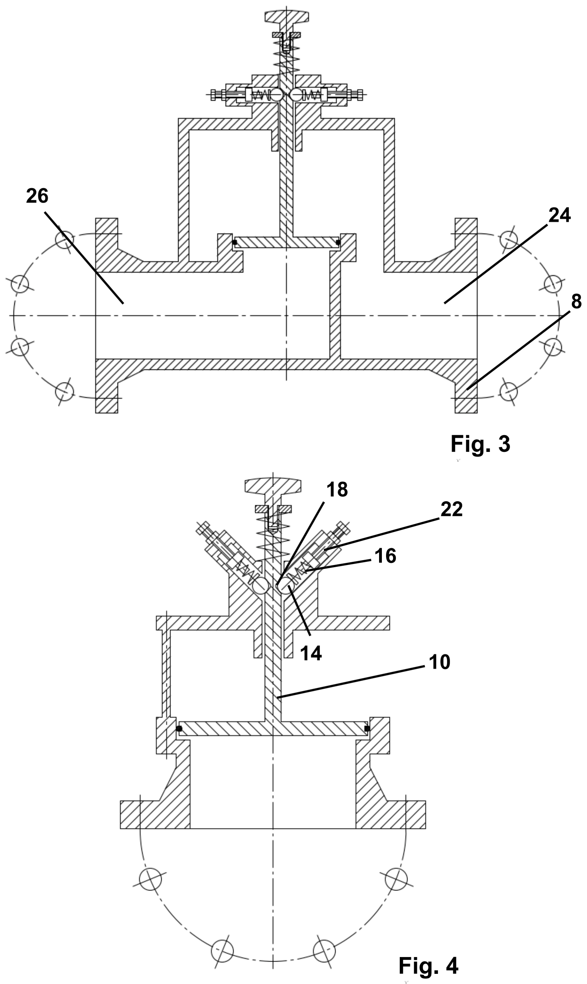

Figur 3 zeigt den Schnitt durch ein Überdruckventil gemäß einem weiteren Ausführungsbeispiel. Es weist den gleichen Auslass 24 mit dem Flansch 8 wie das in Figur 2 dargestellte Überdruckventil auf. Anders als bei den in den vorherigen Figuren dargestellten Überdruckventilen ist in Figur ein Einlass 26 nicht nach unten, sondern zur Seite ausgerichtet.

Figur 4 zeigt eine Ausgestaltung, bei der die Federelemente 16 die Verriegelungselemente 14 in einem von 90° verschiedenen Winkel relativ zum Vorsprung 10 in die Ausnehmungen drücken und in den Ausnehmungen halten. Den Federelementen 16 ist wieder jeweils ein Vorspanner 22 zugeordnet, durch den die von dem jeweiligen Federelement 16 aufgebrachte Kraft veränderbar ist.

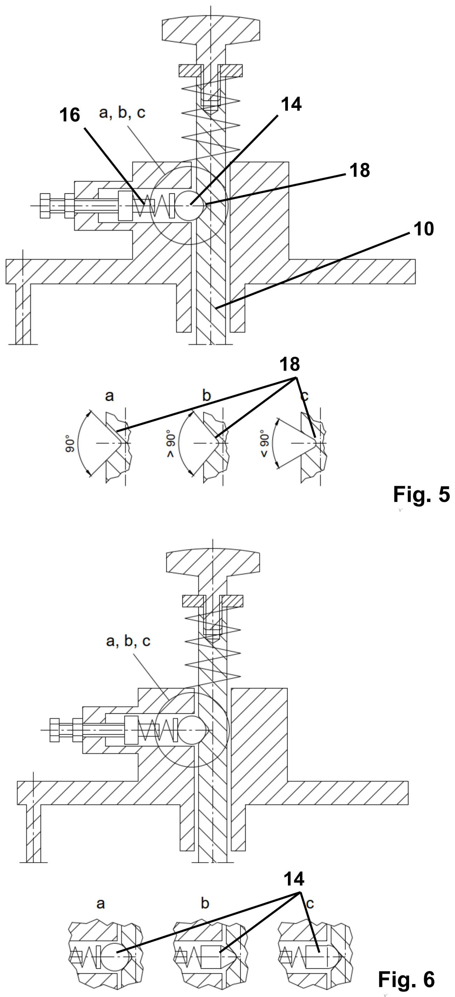

Figur 5 zeigt einen vergrößerten Ausschnitt aus einer Schnittdarstellung eines Überdruckventils gemäß einem weiteren Ausführungsbeispiel der vorliegenden Erfindung. Das Überdruckventil weist ein Verriegelungselement 14 auf, das von einem Federelement 16 in eine Ausnehmung 18 des Vorsprunges 10 gedrückt wird. Im unteren Bereich der Figur 5 sind verschiedene Ausgestaltungen der Ausnehmung 18 dargestellt, die sich durch ihren Öffnungswinkel unterscheiden. In der linken Darstellung beträgt der Öffnungswinkel 90°, in der mittleren mehr als 90° und in der rechten Darstellung weniger als 90°. Dadurch lässt sich verändern, wie leicht ein Verriegelungselement 14 aus der Ausnehmung 18 herausbewegt werden kann.

Figur 6 zeigt im oberen Bereich den Ausschnitt aus der Schnittdarstellung, der dem oberen Bereich der Figur 5 entspricht. Im unteren Bereich sind verschiedene Ausgestaltungen eines Verriegelungselementes 14 dargestellt. In der linken Darstellung ist das Verriegelungselement 14 eine Kugel, in den beiden anderen Darstellungen ein Zylinder mit einem angesetzten Kontaktbereich, der eine Rundung aufweist. Auch dadurch lässt sich verändern, wie leicht das jeweilige Verriegelungselement 14 aus der Ausnehmung 18 herausbewegt werden kann.

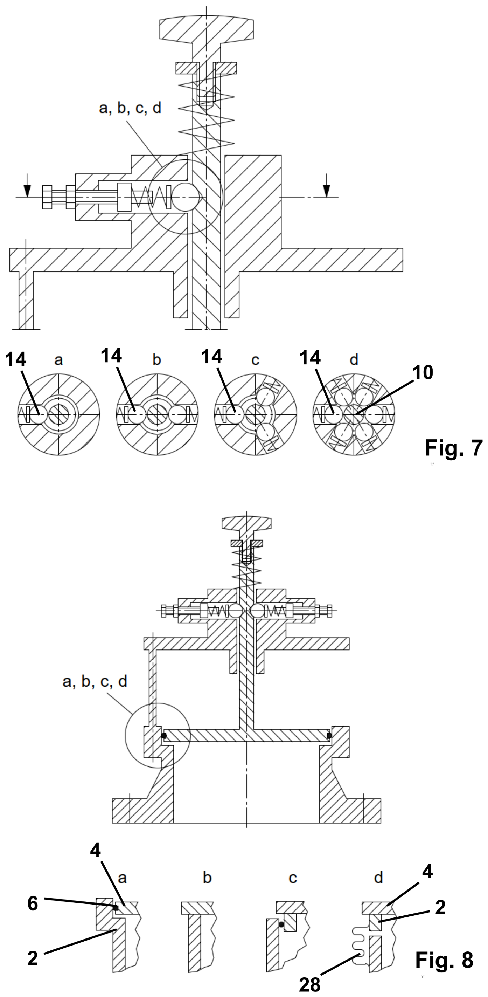

Figur 7 zeigt ebenfalls den gleichen oberen Bereich wie die Figuren 5 und 6. Im unteren Bereich der Figur 7 sind unterschiedliche Konfigurationen unterschiedlich vieler Verriegelungselemente 14 dargestellt. Dabei sind von links nach rechts ein (a), zwei (b), drei (c) und sechs (d) Verriegelungselemente 14 dargestellt. Jedes einzelne Verriegelungselement 14 wird durch ein Federelement 16 in die jeweilige Ausnehmung 18 gedrückt. Dabei ist es durchaus möglich, dass mehrere Verriegelungselemente 14 in eine gemeinsame Ausnehmung 18 gedrückt werden. Die Ausnehmung 18 kann beispielsweise eine teilweise oder vollständig umlaufende Nut sein, die in dem Vorsprung 10 angeordnet ist.

In Figur 8 ist im oberen Bereich Figur 1 dargestellt. Der Kreis zeigt an, an welcher Stelle die im unteren Bereich der Figur 8 dargestellten Elemente angeordnet werden können. Dabei stellen die im unteren Bereich gezeigten Darstellungen wie in den Figuren 5 bis 7 auch alternative Ausgestaltungen dar. Man erkennt, dass der Kontaktbereich zwischen dem Ventilteller 4 und dem Ventilsitz 2 mit einem Dichtring 6 ausgebildet sein kann (a) und (c). In Darstellung (b) ist kein Dichtring vorhanden. Dort liegen Ventilteller 4 und Ventilsitz 2 direkt aneinander an. In Darstellung (d) liegt der Ventilteller 4 ebenfalls direkt auf dem Ventilsitz 2 auf, der über einen Faltenbalg 28 federnd gelagert ist.

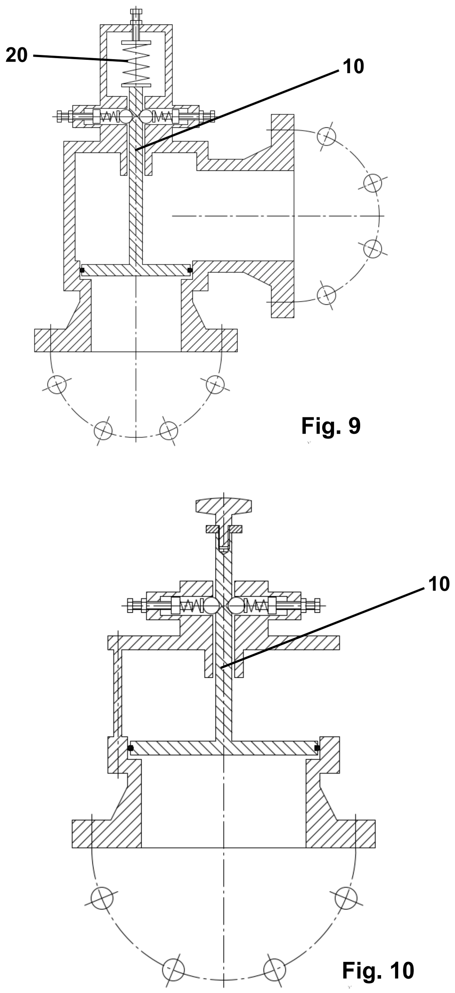

Das in Figur 9 gezeigte Überdruckventil weist am oberen Ende des Vorsprungs 10 die Feder 20 auf, die jedoch in dieser Ausgestaltung keinen Vorspanner 22 aufweist. Anders als die in den vorherigen Figuren dargestellte Feder 20 übt die Feder 20 in Figur 9 eine Druckkraft auf den Vorsprung 10 und damit auf den Ventilteller 4 auf und erhöht somit den Ansprechdruck. In Figur 10 ist am oberen Ende des Vorsprungs 10 keine Feder vorhanden.

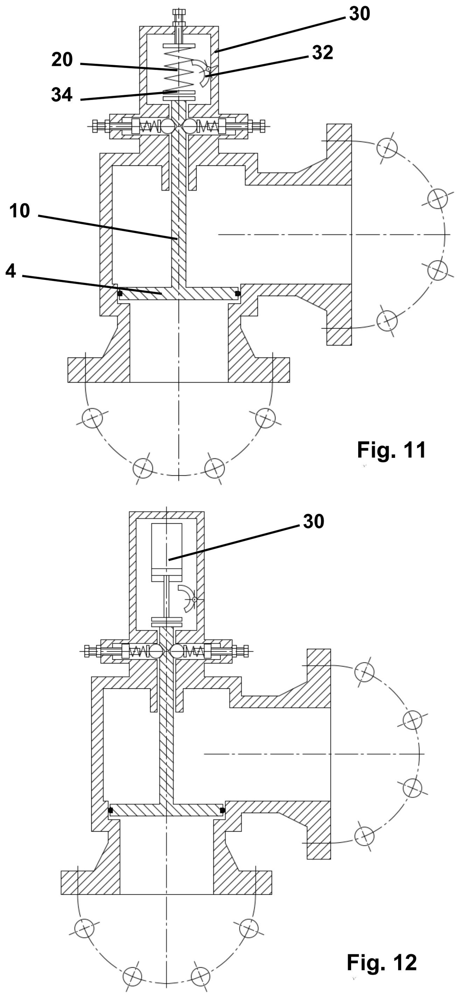

In Figur 11 ist eine Schnittdarstellung durch ein Überdruckventil gemäß einem weiteren Ausführungsbeispiel der vorliegenden Erfindung gezeigt. Diese verfügt über einen Energiespeicher 30. Die darin enthaltene Feder 20 wird beim Verschieben des Ventiltellers 4 aus der gezeigten ersten Position nach oben in die zweite Position komprimiert und ein Betätigungselement 32, das auch als Freigabeeinrichtung bezeichnet werden kann, greift in diesem Fall unter eine dafür vorgesehene Halteplatte 34. Dadurch wird die Feder 20 in ihrem komprimierten Zustand gehalten und speichert potenzielle Energie. Wird das Betätigungselement 32 betätigt, wird das untere Ende der Feder 20 freigegeben und die in der Feder 20 gespeicherte Energie wirkt auf den Vorsprung 10 und damit auf den Ventilteller 4, der wieder in die erste Position gebracht wird.

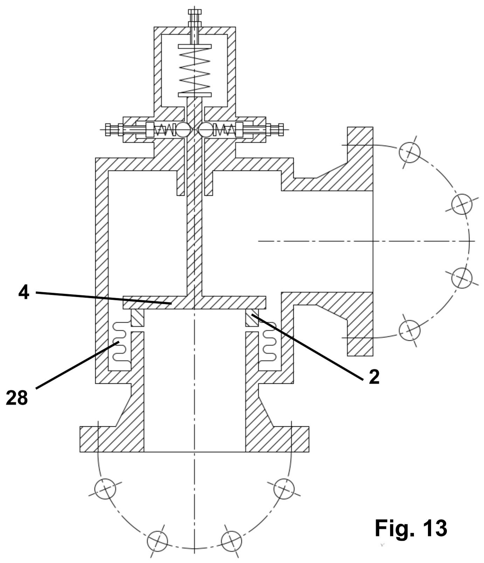

Figur 12 zeigt den Schnitt durch ein Überdruckventil gemäß einem weiteren Ausführungsbeispiel der vorliegenden Erfindung. Es entspricht im Wesentlichen dem in Figur 11 dargestellten Überdruckventil mit dem Unterschied, dass der Energiespeicher 30 als pneumatischer Druckspeicher ausgebildet ist. In Figur 13 ist die Ausgestaltung des Kontaktbereiches zwischen dem Ventilteller 4 und dem Ventilsitz 2 dargestellt, die im unteren Bereich der Figur 8 in der rechten Darstellung gezeigt ist. Der Ventilsitz 2 ist durch den Faltenbalg 28 elastisch gelagert.

### Bezugszeichenliste

2 Ventilsitz
4 Ventilteller
6 Dichtring
8 Flansch
10 Vorsprung
12 Führung
14 Verriegelungselement
16 Federelement
18 Ausnehmung
20 Feder
22 Vorspanner
24 Auslass
26 Einlass
28 Faltenbalg
30 Energiespeicher
32 Betätigungselement
34 Halteplatte

## Patentansprüche

1. Überdruckventil mit einem Ventilsitz (2) und einem Ventilteller (4), der in eine erste Position, in der er mit dem Ventilsitz (2) in Kontakt ist und das Überdruckventil geschlossen ist, und in eine zweite Position bringbar ist, in der das Überdruckventil geöffnet ist,
**dadurch gekennzeichnet, dass** das Überdruckventil wenigstens ein Verriegelungselement (14), wenigstens ein Federelement (16) und wenigstens eine Ausnehmung (18) aufweist, wobei das wenigstens eine Verriegelungselement (14) von dem wenigstens einen Federelement (16) in der wenigstens einen Ausnehmung (18) gehalten wird, wenn sich der Ventilteller (4) in der ersten Position befindet und gegen eine von dem Federelement (16) aufgebrachte Kraft aus der wenigstens einen Ausnehmung (18) bewegt wird, wenn der Ventilteller (4) aus der ersten Position in die zweite Position gebracht wird.

2. Überdruckventil nach Anspruch 1, **dadurch gekennzeichnet, dass** das Überdruckventil mehrere, vorzugsweise zwei, drei oder vier, Verriegelungselemente (14), mehrere, vorzugsweise zwei, drei oder vier, Federelemente (16) und mehrere, vorzugsweise zwei, drei oder vier, Ausnehmungen (18) aufweist.

3. Überdruckventil nach Anspruch 1 oder 2, **dadurch gekennzeichnet, dass** das wenigstens eine Verriegelungselement (14) einen Stift, einen Bolzen und/oder eine Kugel aufweist.

4. Überdruckventil nach einem der vorstehenden Ansprüche, **dadurch gekennzeichnet, dass** das wenigstens eine Verriegelungselement (14) aus einem Metall, beispielsweise Stahl oder Aluminium, oder aus einer Keramik hergestellt ist.

5. Überdruckventil nach einem der vorstehenden Ansprüche, **dadurch gekennzeichnet, dass** an dem Ventilteller (4) ein Vorsprung, beispielsweise eine Ventilspindel, eine Stange, ein Stab oder ein Stift angeordnet ist, der in einer Führung (12) des Überdruckventils bewegbar ist, indem der Ventilteller (4) aus der ersten Position in die zweite Position oder umgekehrt gebracht wird.

6. Überdruckventil nach Anspruch 5, **dadurch gekennzeichnet, dass** die wenigstens eine Ausnehmung (18) an dem Vorsprung (10) und das wenigstens eine Federelement (16) an der Führung (12) angeordnet ist.

7. Überdruckventil nach einem der vorstehenden Ansprüche, **dadurch gekennzeichnet, dass** die wenigstens eine Ausnehmung (18) eine Nut ist, in der mehrere Verriegelungselemente (16) gehalten werden, wenn sich der Ventilteller (4) in der ersten Position befindet.

8. Überdruckventil nach einem der vorstehenden Ansprüche, dass das wenigstens eine Verriegelungselement (16) in die Ausnehmung (18) hineinragt, wenn es in der Ausnehmung (18) gehalten wird.

9. Überdruckventil nach einem der vorstehenden Ansprüche, **dadurch gekennzeichnet, dass** das Überdruckventil einen Energiespeicher (30) aufweist, in dem Energie gespeichert wird, wenn der Ventilteller (4) aus der ersten Position in die zweite Position gebracht wird.

10. Überdruckventil nach Anspruch 9, **dadurch gekennzeichnet, dass** das Überdruckventil eine Freigabeeinrichtung (32) aufweist, durch deren Betätigen in dem Energiespeicher (30) gespeicherte Energie freigegeben wird, die dann auf den Ventilteller (4) wirkt und ihn aus der zweiten Position in die erste Position bringt.
